# EUROPÄISCHE PATENTSCHRIFT

(11) **EP 4 120 133 B1**
(45) Veröffentlichungstag und Bekanntmachung des Hinweises auf die Patenterteilung: **24.04.2024**
(21) Anmeldenummer: 22184771.8
(22) Anmeldetag: 13.07.2022
(51) Int. Cl.: G06K 17/00, G06K 19/07, A47G 19/00

(54) **SYSTEM BESTEHEND AUS EINEM SMART LABEL UND EINEM ABSCHIRMELEMENT SOWIE MIKROWELLENGEEIGNETES GESCHIRRTEIL**
SYSTEM COMPRISING A SMART LABEL AND A SHIELDING ELEMENT AS WELL AS A MICROWAVABLE CROCKERY
SYSTÈME COMPOSÉ D'UNE ÉTIQUETTE INTELLIGENTE ET D'UN ÉLÉMENT DE BLINDAGE, AINSI QUE D'UNE PIÈCE DE VAISSELLE COMPATIBLE AVEC LES MICRO-ONDES

(30) Priorität: 13.07.2021 DE 102021118103; 30.06.2022 EP 22182092
(43) Veröffentlichungstag der Anmeldung: 18.01.2023
(73) Patentinhaber: etifix GmbH, 72661 Grafenberg (DE)
(72) Erfinder: Bohn, Martin, 72762 Reutlingen (DE); Dudzik, Claus-Udo, 72070 Tübingen (DE)
(74) Vertreter: Christ, Niko

(56) Entgegenhaltungen:
- EP-A1- 2 383 682
- WO-A1-2009/018922
- US-A1- 2018 189 623

## Beschreibung

Die vorliegende Erfindung betrifft ein System bestehend aus einem Smart Label und einem Abschirmelement, wobei das Abschirmelement eine von dem Smart Label lösbare erste Metallschicht umfasst und das Smart Label einen RFID-Chip, eine mit diesem elektrisch verbundene Antenne und eine zweite Metallschicht umfasst, wobei der RFID-Chip (10) mit der Antenne (9) zu einem Inlay (5) zusammengefasst ist, welches zur Abschirmung vor Mikrowellenstrahlung flächenparallel zu der zweiten Metallschicht angeordnet ist. Weiter betrifft die Erfindung ein Mikrowellengeeignetes Geschirrteil mit einem solchen System.

Ein solches System sowie ein vergleichbares Geschirrteil ist bereits aus der DE 10 2021 118 103 A1 vorbekannt.

Ein weiteres Smart Label ist bereits aus der US 2018/0189623 A1 vorbekannt. Ferner ist hinsichtlich des Standes der Technik auf die WO 2009/018922 A1, die EP 1 912 162 B1 und die EP 2 053 544 A1 zu verweisen.

Darüber hinaus ist ein solches Smart Label in der US 2019/0325282 A1 beschrieben. Dort wird vorgeschlagen, einen RFID-Chip (RFID = Radio Frequency IDentification, Identifikation mittels elektromagnetischer Wellen) an einer Einwegverpackung anzuordnen, welcher einerseits ein Auslesen und eine automatische Programmierung eines Mikrowellenofens ermöglichen, andererseits aber in dem Mikrowellenofen nicht zu größeren Schäden als dem Verlust des RFID-Chips selbst führen soll. Hierzu wird der RFID-Chip auf einem Substrat aufgebracht, wobei diesem im Bereich des RFID-Chips eine Aluminiumschicht lokal hinzugefügt wird. Diese soll davor schützen, dass ein Funkenschlag während des Mikrowellenbetriebs entsteht und zu einem Brand der mit dem RFID-Chip versehenen Verpackung führt. Für seinen Betrieb ist dem RFID-Chip eine Dipolantenne zugeordnet, welche über die Aluminiumschicht hinausragt um von dieser unbeeinflusst senden und empfangen zu können. Eine prinzipiell gleichwirkende Lösung ergibt sich ferner aus der US 10,311,355 B1.

Sinn und Zweck einer solchen Lösung ist es, eine Einwegverpackung für Nahrungsmittel mit einem Smart Label zu versehen, welches im Normalfall noch in dem Mikrowellenofen selbsttätig ausgelesen werden kann und insoweit auch die Möglichkeit bietet, zu dem Inhalt der Einwegverpackung passende Zubereitungsdaten und Parameter für den Mikrowellenofen bereitzustellen. Allerdings reagiert auch der RFID-Chip auf die eingestrahlte Energie des Mikrowellenofens und wird aufgrund der hierbei auftretenden Wärme während des Erhitzungsvorgangs bereits nach kurzer Zeit zerstört. Die etwa in der US 10,311,355 B1 beschriebene Unterlegung des RFID-Chips mit unterschiedlichen metallischen Formkörpern dient in diesem Zusammenhang dazu, Wirbelströme in dem Smart Label zu vermeiden und dadurch zu verhindern, dass die Einwegverpackung in Brand gesetzt wird. Der Verlust des RFID-Chips an sich wird hingenommen, da es sich ohnehin um eine Einwegverpackung handelt, so dass der RFID-Chip nach der einmaligen Verwendung nicht mehr benötigt wird.

Als weitere, ähnlich gelagerte Schriften sind in diesem Zusammenhang die EP 2 383 682 B1, die WO 2020/006219 A1, die CN 210324262 U und die DE 21 2019 000 085 U1 zu nennen.

Soweit anstelle von Einwegverpackungen Geschirr eingesetzt werden soll, welches mehrfach benutzt wird und dem insoweit auch andere Daten zugeordnet werden sollen, eignen sich die aus dem Stand der Technik bekannten Lösungen nicht. Insbesondere in Kantinen, Mensen, Restaurants oder Bistros wird mikrowellengeeignetes Geschirr eingesetzt, welches mit einem Smart Label versehen werden soll, mit dem einerseits eine Pfandausgabe erfolgen kann, andererseits eine automatisierte Abrechnung erfolgen kann. Ein einfaches Platzieren eines Geschirrteils mit einem Smart Label an einer Lesestelle soll genügen, um eine Leihe, den Kauf einer Mahlzeit oder die Rückgabe zu bewirken. Wird das Geschirr mit dem Essen jedoch mitgenommen um dieses später nochmals im Mikrowellenofen aufzuwärmen, so kann das Smart Label durch die Mikrowellen zerstört werden, so dass die Funktionen nicht mehr ausgeführt werden können.

Ausgehend hiervon sieht die DE 10 2021 118 103 A1 ein Smart Label vor, mit dem ein Auslesen eines in dem Smart Label integrierten RFID-Chips möglich ist und der dennoch zusammen mit dem Geschirrteil in einem Mikrowellenofen erhitzt werden kann, ohne zerstört zu werden. Dies gelingt durch eine Metallfolie, welche unterhalb des verwendeten RFID-Chips eingesetzt wird, um diesen gegen die Mikrowellenstrahlung abzuschirmen. Um die Funktion des Chips zu gewährleisten wird eine Ferritschicht oder eine Schaumschicht zwischen der metallischen Abschirmung und dem Chip angebracht. Von der Gegenseite her wird eine Alufolie über die Anordnung gelegt, so dass der RFID-Chip zwischen zwei Metallschichten aufgehoben ist. Die Metallfolie auf der Gegenseite ist lösbar und kann nach der Erwärmung im Mikrowellenofen entfernt werden.

Es ist insbesondere vorgeschlagen, ein Smart Label am Boden eines wiederverwendbaren Mikrowellenbehälters anzubringen und das Abschirmelement an dem Deckel. Dann wird der Deckel in der Mikrowelle als Untersetzer benutzt und der RFID-Chip ist wiederum zwischen den Metallschichten gekapselt. Aufgrund dieser Kapselung werden die Mikrowellenstrahlen von dem RFID-Chip fortgehalten und eine Beschädigung des Chips ist vermieden.

Allerdings trägt je nach dem verwendeten RFID-Chip die hierfür erforderliche Ferritschicht oder gar Schaumschicht dick auf, so dass ein voluminöses und damit mechanisch angreifbares Smart Label entsteht. Ohne eine solche Schicht wiederum ist die Sendeleistung des RFID-Chips so schlecht, dass dieser auch aus der direkten Nähe nicht ausgelesen werden kann.

Aus der WO 2009/018922 A1 ist es ferner bekannt, dass bei einer Verwendung einer Abschirmung aus beabstandeten und unterteilten Folienabschnitten, welche von der Antenne überbrückt werden, ein Schutz des RFID-Chips mit einer ausreichenden Sendeleistung vereinbar ist.

Vor diesem Hintergrund stellt sich der vorliegenden Erfindung die Aufgabe, ein System mit einem Smart Label zu schaffen, welches mit einer möglichst geringen Dicke auskommt und damit auf der Unterseite von mikrowellengeeigneten Geschirrteilen angeordnet zu werden.

Dies gelingt durch ein System bestehend aus einem Smart Label und einem Abschirmelement gemäß den Merkmalen des unabhängigen Anspruchs 1, sowie durch ein mikrowellengeeignetes Geschirrteil in Verbindung mit einem Abschirmelement gemäß den Merkmalen des nebengeordneten Anspruchs 7. Weitere, sinnvolle Ausgestaltungen eines solchen Systems und eines solchen Geschirrteils können den sich jeweils anschließenden abhängigen Ansprüchen entnommen werden.

Erfindungsgemäß vorgesehen ist ein System bestehend aus einem Smart Label und einem Abschirmelement, wobei das Abschirmelement eine von dem Smart Label lösbare erste Metallschicht umfasst und das Smart Label einen RFID-Chip, eine mit diesem elektrisch verbundene Antenne und eine zweite Metallschicht umfasst, wobei der RFID-Chip zur Abschirmung vor Mikrowellenstrahlung flächenparallel zu der zweiten Metallschicht angeordnet ist. Dieses ist dadurch gekennzeichnet, dass der RFID-Chip unter Zwischenlage lediglich einer Klebeschicht direkt auf der zweiten Metallschicht aufgebracht ist, wobei die zweite Metallschicht aus mehreren benachbarten Folienabschnitten hergestellt ist, welche zwischen sich jeweils einen Abstand einschließen, und die Antenne zumindest abschnittsweise zwischen den Folienabschnitten verläuft oder den Abstand überbrückt. Ein solcher RFID-Chip kann insbesondere ein reiner Informationsspeicher sein, aber auch als Sensorchip ausgestaltet werden, der etwa eine aktuelle Temperatur erfassen und über die Antenne als Informationswert ausgeben kann.

Es hat sich gezeigt, dass die Anordnung eines solchen RFID-Chips direkt auf der abschirmenden Folie angeordnet werden kann, wenn die Antenne zumindest abschnittsweise durch die Folie abstrahlen kann. Dies ist der Fall, wenn die Folie aus mehreren Folienabschnitten besteht, welche in einem Abstand zueinander benachbart angeordnet sind. Die vorzugsweise aus Aluminium gefertigten Folienabschnitte schützen sowohl die Antenne als auch den Chip vor der Mikrowellenstrahlung, während aber bei einer geeigneten Dimensionierung des Abstands der Folienabschnitte zueinander eine Abstrahlung dennoch erfolgen kann.

Hierbei kann es bevorzugtermaßen vorgesehen sein, dass es sich bei dem RFID-Chip um einen NFC-, HF- oder UHF-Chip, oder einen Dual-Frequency-Chip mit mehreren dieser Frequenzbereiche handelt. Die vorgeschlagene Lösung funktioniert prinzipiell bei allen Arten von RFID-Chips und erlaubt damit vielfältige Lösungen, die allesamt vergleichsweise flach auftragen.

Mit besonderem Vorteil kann der Abstand zwischen den Folienabschnitten kleiner als ein Millimeter gewählt werden. Ein solcher Abstand lässt zwar die seitens der Antenne abgestrahlte Energie passieren, hingegen nicht die Mikrowellenstrahlung, welche an der an dem Abstand beiderseits angrenzenden Folie reflektiert wird und damit nicht bis zu dem RFID-Chip durchdringen kann.

Ferner hat es sich als vorteilhaft erwiesen, wenn der RFID-Chip mit der Antenne zu einem Inlay, vorzugsweise einem Wet Inlay, zusammengefasst ist. Ein solches Inlay kann dann als Ganzes wie ein Aufkleber verwendet und unproblematisch industriell appliziert werden.

In konkreter Ausgestaltung kann das Smart Label eine erste Deckfolie und eine zweite Deckfolie aufweisen, zwischen denen der RFID-Chip, die Antenne und die Folienabschnitte, unter Zwischenlage einer partiell oder vollflächig applizierten Klebeschicht, aufgenommen sind. Hierdurch entsteht ein vollständig zusammengefasstes Smart Label, während das Inlay lediglich den Chip und die Antenne, nicht aber die Folienabschnitte umfasst. Hierbei reicht prinzipiell eine einseitige partielle, im Grenzfall punktuelle Anbringung von Klebstoff aus, so dass RFID-Chip, Antenne und Folienabschnitte schwimmend zwischen den Deckfolien aufgenommen sind. Wellenschlag aufgrund unterschiedlicher Wärmeausdehnung wird dadurch vermieden und gewährleistet, dass das Smart Label jederzeit flach und mechanisch fest an einer Oberfläche anliegt. Auch das so vorbereitete Smart Label kann nunmehr wie ein Aufkleber platziert werden.

Dies insbesondere dann, wenn dem Smart Label auf seiner den Folienabschnitten zugewandten Deckfolie eine Klebstoffschicht sowie ein lösbares Trägerpapier, vorzugsweise ein einseitig silikonisiertes Trägerpapier, zugeordnet ist. Während die Klebstoffschicht dazu dient, die untere, zweite Deckfolie mit einem Untergrund zu verkleben, sorgt das Trägerpapier, etwa ein einseitig silikonisiertes Glassinepapier, dafür, dass vor dem Aufkleben des Smart Labels die Handhabbarkeit des Labels nicht leidet, indem es die unterste Klebeschicht abdeckt, von dieser aber leicht ablösbar ist und die Klebefähigkeit erhält.

In besonders bevorzugter Ausgestaltung können die Folienabschnitte aus Aluminiumfolie hergestellt sein.

Weiter ist erfindungsgemäß vorgesehen ein mikrowellengeeignetes Geschirrteil, umfassend einen Behälter mit einem Smart Label und ein Abschirmelement, wobei das Abschirmelement eine von dem Behälter lösbare erste Metallschicht umfasst, welche als Manschette, als Untersetzer oder als weiteres Geschirrteil, insbesondere als Deckel ausgestaltet ist, und das Smart Label einen RFID-Chip, eine mit diesem elektrisch verbundene Antenne und eine zweite Metallschicht umfasst, wobei der RFID-Chip zur Abschirmung vor Mikrowellenstrahlung flächenparallel zu der zweiten Metallschicht angeordnet ist. Ein solches Geschirrteil ist dadurch gekennzeichnet, dass der RFID-Chip unter Zwischenlage lediglich einer Klebeschicht direkt auf der zweiten Metallschicht aufgebracht ist, wobei die zweite Metallschicht aus mehreren benachbarten Folienabschnitten hergestellt ist, welche zwischen sich jeweils einen Abstand einschließen, und die Antenne zumindest abschnittsweise zwischen den Folienabschnitten verläuft oder den Abstand überbrückt.

Das System kann sich in einem solchen Produkt vorteilhaft entfalten, weil es auf dem Boden oder an dem Deckel des Geschirrteils nicht aufträgt und daher auch mechanisch sehr wenig beansprucht ist. Dennoch ist durch die bereits im Zusammenhang mit dem eingangs angesprochenen System umgesetzte Form der Folienabschnitte eine gute Funktion der Antenne gewährleistet, so dass ein Auslesen zuverlässig erfolgen kann.

Auch hier kann in konkreter Ausgestaltung das Smart Label eine erste Deckfolie und eine zweite Deckfolie aufweisen, zwischen denen der RFID-Chip, die Antenne und die Folienabschnitte, unter Zwischenlage wenigstens einer partiell oder vollflächig applizierten Klebeschicht, aufgenommen sind. Dies ist besonders vorteilhaft, wenn die erste Deckfolie und/oder die zweite Deckfolie eine zumindest näherungsweise identische Wärmeausdehnung aufweisen wie der Behälter. Hierdurch kann etwa bei starken Erwärmungen oder Abkühlungen, etwa auch bei einem Spülvorgang mit heißem Wasser, sichergestellt werden, dass keine unterschiedlichen Schrumpf- oder Ausdehnungserscheinungen auftreten, aufgrund derer das Smart Label bei unterschiedlichen Wärmeausdehnungskoeffizienten sich leicht vom Behälter ablösen würde. Vielmehr ist die Haftung am Behälter hierdurch deutlich verbessert. Die Klebstoffe können so ausgewählt sein, dass Relativbewegungen auch zwischen dem Inlay und den Deckfolien möglich sind, also in diesem Sinne eine schwimmende Lagerung realisiert ist.

Bevorzugtermaßen kann das Smart Label an dem Behälter in einer Kavität aufgenommen sein. Diese kann nach Bedarf flach oder tief sein, jedoch das Smart Label so umgeben, dass dessen Kanten von der Wandung der Kavität so umgeben sind, dass eine mechanische Beanspruchung im Alltag vermieden ist.

Ergänzend kann das Smart Label, etwa in der Kavität, durch geeignete Maßnahmen gesichert sein, welche eine Abdeckung mit einer Schutzfolie, ein Vergießen mit einer Vergussmasse, das Aufschweißen einer dünnen Kunststoffplatte oder das Einbringen im In-Mould-Verfahren einschließen können. Hierdurch ist das Smart Label auch vor größeren mechanischen Beanspruchungen und zudem gegen Feuchtigkeit geschützt.

Die vorstehend beschriebene Erfindung wird im Folgenden anhand eines Ausführungsbeispiels näher erläutert.

Es zeigen
- Figur 1: ein Smart Label in einer schematischen Draufsicht,
- Figur 2: ein alternatives Smart Label in einer schematischen Draufsicht,
- Figur 3: ein erfindungsgemäßes System aus einem Smart Label gemäß Figur 1 in einer seitlichen schematischen Schichtdarstellung mit einem zugehörigen Abschirmelement, sowie
- Figur 4: ein Geschirrteil mit einem Smart Label und ein Deckel mit einem Abschirmelement in seitlicher Querschnittsdarstellung.

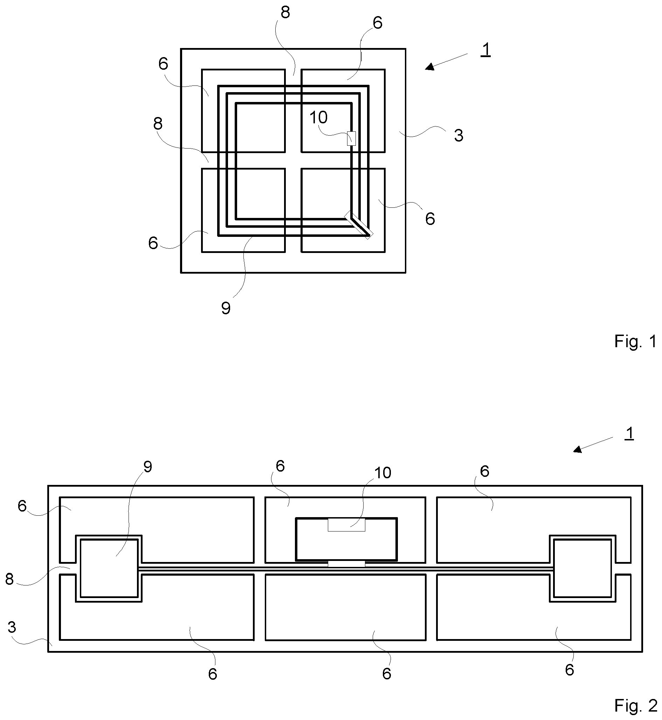

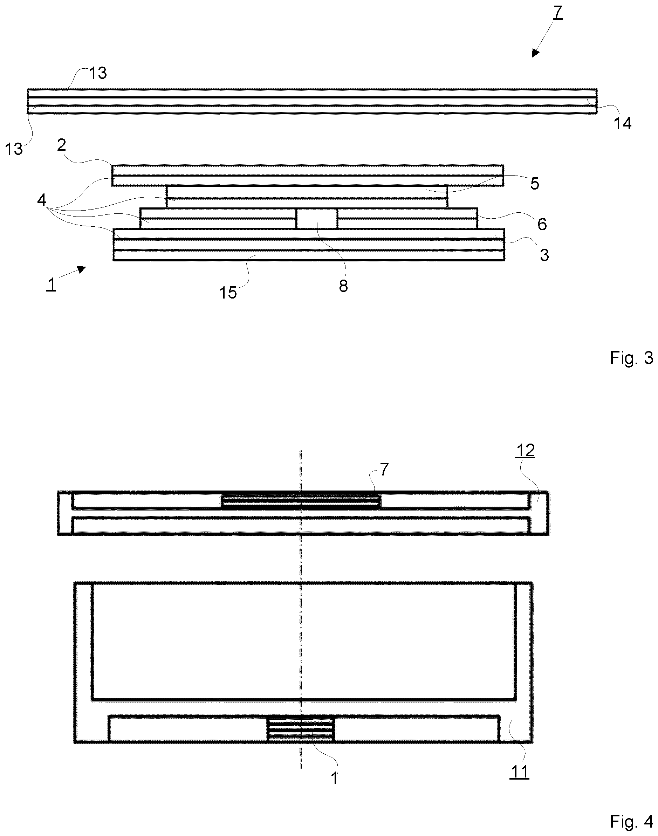

Figur 1 zeigt ein Smart Label 1, welches Teil eines Systems ist, das bei einer Benutzung in einem Mikrowellenofen noch mit einem Abschirmelement gemäß Figur 3 abgedeckt werden kann. Das Smart Label 1 ist auf einer zweiten Deckfolie aufgebaut, welche als Fläche dient, auf welcher eine Mehrzahl von Folienabschnitten 6 aufgebracht werden. Diese werden so angeordnet, dass zwischen den einzelnen Folienabschnitten 6 jeweils ein Abstand 8 in der Weite von höchstens einem Millimeter freigehalten wird. Hierdurch kann die von einem Magnetron ausgesandte Mikrowellenstrahlung in einem Mikrowellenofen nicht durch den Abstand hindurchgelangen. Der RFID-Chip 10 kann über eine mit dem RFID-Chip 10 verbundene Antenne 9 ausgelesen werden. Dies ermöglicht es, dass der RFID-Chip 10 lediglich unter Zwischenlage einer Klebeschicht 4 nahezu direkt auf dem Folienabschnitt 6 appliziert werden kann. Hierfür kann der RFID-Chip 10 mit seiner Antenne 9 als Inlay 5, insbesondere als Wet Inlay vorgefertigt sein, also als eine Art Aufkleber, der mit einem Klebemittel beschichtet und auf einem mit einem Trennmittel versehenen Träger vorgehalten werden kann. Dieses Inlay 5 wird dann direkt auf den Folienabschnitten 6 platziert, die wiederum auf der zweiten Deckfolie 3 aufgeklebt sind. Das Ganze wird wiederum von einer ersten Deckfolie 2 übergriffen, welche unter Zwischenlage einer Klebeschicht 4 unter Einschluss des Inlays und der Folienabschnitte 6 auf der zweiten Deckfolie 3 aufgebracht wird.

Figur 2 zeigt eine von zahlreichen alternativen Ausgestaltungen eines RFID-Chips 10 mit UHF-Technik. Hier ist die Antenne 9 vollständig in einem Abstand 8 zwischen den Folienabschnitten 6 angeordnet, während der RFID-Chip 10 selbst auf dem Folienabschnitt 6 aufgeklebt und mit der Antenne 9 verbunden ist.

Figur 3 zeigt den Schichtaufbau eines erfindungsgemäßen Smart Labels 1 und eines Abschirmelements 7 in einer seitlichen Darstellung. Zentraler Bestandteil ist hierbei ein Inlay 5, welches sowohl einen mittels eines NFC-Lesegeräts auslesbaren RFID-Chip 10 als auch dessen Antenne 9 enthält, sowie eine Metallschicht aus beabstandeten Folienabschnitten 6, auf welcher das Inlay 5 aufgebracht ist. Die Zwischenlage einer Trennschicht, wie beispielsweise einer Ferritschicht, kann durch die Beabstandung der Folienabschnitte 6 entfallen.

Untereinander sind die genannten Schichten 5 und 6, sowie eine erste Deckfolie 2 und eine zweite Deckfolie 3 durch Klebeschichten 4 miteinander verbunden, welche dafür sorgen, dass das Smart Label 1 als Ganzes zusammenhält. Der zweiten Deckfolie 3 ist auf ihrer von dem Inlay 5 weg weisenden Seite zudem eine weitere Klebeschicht 4 zugeordnet, auf welcher ein silikonisiertes Trägerpapier 15 das Smart Label 1 abschließt. In diesem Zustand kann das Smart Label 1 ausgeliefert werden. Zum Befestigen an einem auszuzeichnenden Gegenstand kann das Trägerpapier 15 abgezogen werden und aufgrund der darunter liegenden Klebeschicht 4 auf Acrylbasis ist das Smart Label 1 im Ganzen selbstklebend.

Auf der Gegenseite des Inlays 5 ist dieses unter Zwischenlage einer weiteren Klebeschicht 4 von einer ersten Deckfolie 2, vorzugsweise aus Polyethylenterephthalat überzogen. Diese kann als Grundlage für einen Digitaldruck dienen, mit dem das Smart Label 1 nach außen sichtbar beschriftet werden kann. Neben einer menschenlesbaren Beschriftung zur Orientierung, für einige wenige Informationen, zur Anwendung einer Corporate Identity oder zum Aufbringen einer Marke, kann dem Smart Label 1 so auch ein maschinenlesbarer Code, wie etwa ein QR-Code, zugeordnet sein. Dieser kann die im Speicher des RFID-Chips 10 enthaltenen unveränderlichen Daten zumindest teilweise enthalten. Im Fall einer unerwarteten Beschädigung des RFID-Chips 10 kann auf diese Weise trotzdem noch ein Auslesen des Smart Labels 1 gewährleistet werden.

Um das Inlay 5 mit dem darin enthaltenen RFID-Chip nun vor Mikrowellenstrahlung zu schützen, kann ein Abschirmelement 7 vorgesehen werden, welches so platziert wird, dass es mittig über dem Smart Label 1 angeordnet ist. Das Abschirmelement 7 umfasst eine erste Metallschicht 14, welche beiderseits mit Papier und/oder Folie 13 überzogen ist. Dies erlaubt es, auch das Abschirmelement 7 nach Belieben zu bedrucken, etwa wiederum mit einer Corporate Identity, oder mit einer Benutzungsanleitung. Das Abschirmelement 7 mit seiner ersten Metallschicht 14 stellt eine von mehreren Möglichkeiten dar, eine solche separate Metallschicht bereitzustellen, um das Inlay 5 für einen Schutz während eines Aufenthalts im Mikrowellenofen zwischen zwei Metallschichten 14 und 6 einzuschließen. Die beiderseits angeordneten Metallschichten 14 und 6 schirmen den in dem Inlay 5 vorgehaltenen RFID-Chip 10 und seine Antenne 9 von einer Mikrowellenstrahlung im Mikrowellenofen ab, so dass das Smart Label 1 eine Verbringung in den Mikrowellenofen unbeschadet übersteht. Eine Abstrahlung von der Antenne 9 ist nach der Entfernung des Abschirmelements 7 wieder möglich.

Figur 4 zeigt schließlich einen mikrowellengeeigneten Behälter 11, in dessen Boden eine Bodenkavität vorhanden ist. Derartige Behälter 11 sind bereits bekannt und für den Einsatz mit Mikrowellenöfen vorgesehen. Wird nun ein Smart Label 1 gemäß Figur 1 oder 2 in die Bodenkavität eingeklebt, so kann der Behälter 11 hierdurch individualisiert und beispielsweise innerhalb eines Leihsystems einem Kunden zugeordnet werden. So kann ein Kunde diesen Behälter etwa beim Ausleihen an einer Kasse auf einen NFC-Leser stellen oder das Smart Label 1 mit einer Software seines Mobiltelefons auslesen, um die Leihe zu bewirken. Die Kosten, etwa eine Pfandzahlung, können einem verknüpften Konto belastet werden.

Wird in einer Kantine in einem nächsten Schritt ein Essen ausgewählt, so wird der Behälter 11 mit dem sendebereiten Smart Label 1 auf ein NFC-Lesegerät gestellt, welches einer Essensstation zugeordnet ist. Das NFC-Lesegerät liest das Smart Label 1 aus, stellt fest um welchen Behälter 11 es sich handelt und erhält die Information aus dem System, dass dieser Behälter 11 von dem Benutzer ausgeliehen wurde. Dem Konto des Benutzers wird daher nur der Preis für das Essen belastet.

Nimmt der Benutzer den Behälter 11 nunmehr mit nach Hause und will er das Essen dort in seinem Mikrowellenofen aufwärmen, so muss der Benutzer dafür sorgen, dass der RFID-Chip 10 des Smart Labels 1 nicht beschädigt wird. Hierzu stellt er einen Deckel 12, den er mit dem Behälter 11 erhalten hat, unter den Behälter 11 in den Mikrowellenofen. Der Deckel 12 weist seinerseits eine Deckelkavität auf, in welche eine erste Metallschicht 14 und eine Deckschicht 13 mit einem dekorativen und/oder informativen Aufdruck eingebracht wurde. Die erste Metallschicht 14 wirkt bei einer Verwendung des Deckels 12 als Untersetzer des Behälters 11 als Abschirmelement 7 mit der zweiten Metallschicht aus Folienabschnitten 6 des Smart Labels 1 zusammen, so dass der RFID-Chip 10 in dem Inlay 5 vor der Mikrowellenstrahlung geschützt ist.

Vorstehend beschrieben ist somit ein System mit einem Smart Label, welches mit einer möglichst geringen Dicke auskommt und damit auf der Unterseite von mikrowellengeeigneten Geschirrteilen angeordnet zu werden, sowie einem zugehörigen Abschirmelement.

### BEZUGSZEICHENLISTE

- 1: Smart Label
- 2: erste Deckfolie
- 3: zweite Deckfolie
- 4: Klebeschicht
- 5: Inlay
- 6: Folienabschnitte
- 7: Abschirmelement
- 8: Abstand
- 9: Antenne
- 10: RFID-Chip
- 11: Behälter
- 12: Deckel
- 13: Papier und/oder Folie
- 14: erste Metallschicht
- 15: Trägerpapier

## Patentansprüche

1. System bestehend aus einem Smart Label (1) und einem Abschirmelement (7), wobei das Abschirmelement (7) eine von dem Smart Label (1) lösbare erste Metallschicht (14) umfasst und das Smart Label (1) einen RFID-Chip (10), eine mit diesem elektrisch verbundene Antenne (9) und eine zweite Metallschicht umfasst, wobei der RFID-Chip (10) mit der Antenne (9) zu einem Inlay (5) zusammengefasst ist, welches zur Abschirmung vor Mikrowellenstrahlung flächenparallel zu der zweiten Metallschicht angeordnet ist,
**dadurch gekennzeichnet, dass** der RFID-Chip (10) unter Zwischenlage lediglich einer Klebeschicht (4) direkt auf der zweiten Metallschicht aufgebracht ist, wobei die zweite Metallschicht aus mehreren benachbarten Folienabschnitten (6) hergestellt ist, welche zwischen sich jeweils einen Abstand (8) von höchstens einem Millimeter einschließen, und die Antenne (9) zumindest abschnittsweise zwischen den Folienabschnitten (6) verläuft oder den Abstand (8) überbrückt, wobei die beiderseits angeordneten Metallschichten (14, 6) den in dem Inlay (5) vorgehaltenen RFID-Chip (10) und seine Antenne (9) von einer Mikrowellenstrahlung abschirmen.

2. System gemäß Anspruch 1, **dadurch gekennzeichnet, dass** es sich bei dem RFID-Chip (10) um einen NFC-, HF- oder UHF-Chip oder einen Dual-Frequency-Chip mit mehreren dieser Frequenzbereiche handelt.

3. System gemäß einem der Ansprüche 1 oder 2, **dadurch gekennzeichnet, dass** der Abstand (8) zwischen den Folienabschnitten (6) kleiner als ein Millimeter gewählt ist.

4. System gemäß einem der vorhergehenden Ansprüche, **dadurch gekennzeichnet, dass** das Smart Label (1) eine erste Deckfolie (2) und eine zweite Deckfolie (3) aufweist, zwischen denen der RFID-Chip (10), die Antenne (9) und die Folienabschnitte (6), unter Zwischenlage wenigstens einer partiell oder vollflächig ausgeführten Klebeschicht (4), aufgenommen sind.

5. System gemäß Anspruch 4, **dadurch gekennzeichnet, dass** dem Smart Label (1) auf seiner den Folienabschnitten (6) zugewandten zweiten Deckfolie (3) eine Klebstoffschicht sowie ein lösbares Trägerpapier, vorzugsweise ein einseitig silikonisiertes Trägerpapier (15), zugeordnet ist.

6. System gemäß einem der vorhergehenden Ansprüche, **dadurch gekennzeichnet, dass** die Folienabschnitte (6) aus Aluminiumfolie hergestellt sind.

7. Mikrowellengeeignetes Geschirrteil, umfassend einen Behälter (11) mit einem System gemäß Anspruch 1, wobei das Abschirmelement (7) eine von dem Behälter (11) lösbare erste Metallschicht (14) umfasst, welche als Manschette, als Untersetzer oder als weiteres Geschirrteil, insbesondere als Deckel (12) ausgestaltet ist.

8. Geschirrteil gemäß Anspruch 7, **dadurch gekennzeichnet, dass** das Smart Label (1) eine erste Deckfolie (2) und eine zweite Deckfolie (3) aufweist, zwischen denen der RFID-Chip (10), die Antenne (9) und die Folienabschnitte (6), unter Zwischenlage wenigstens einer partiell oder vollflächig ausgeführten Klebeschicht (4), aufgenommen sind.

9. Geschirrteil gemäß Anspruch 8, **dadurch gekennzeichnet, dass** die erste Deckfolie (2) und/oder die zweite Deckfolie (3) eine zumindest näherungsweise identische Wärmeausdehnung aufweisen wie der Behälter (11), wobei die Klebstoffe der Klebeschichten (4) vorzugsweise so ausgewählt sind, dass Relativbewegungen auch zwischen dem Inlay und den Deckfolien möglich sind.

10. Geschirrteil gemäß einem der Ansprüche 7 bis 9, **dadurch gekennzeichnet, dass** das Smart Label (1) in einer Kavität des Behälters (11) aufgenommen ist.

11. Geschirrteil gemäß einem der Ansprüche 7 bis 10, **dadurch gekennzeichnet, dass** das Smart Label (1) mit einer Schutzfolie oder Vergussmasse oder einer Kunststoffplatte, durch ein In-Mould-Verfahren oder durch Heißversiegelung umschlossen und/oder unlösbar mit dem Behälter verbunden ist.

## Claims

1. A system consisting of a smart label (1) and a shielding element (7), wherein the shielding element (7) comprises a first metal layer (14) which can be detached from the smart label (1) and the smart label (1) comprises an RFID chip (10), an antenna (9) electrically connected thereto and a second metal layer, wherein the RFID chip (10) is combined with the antenna (9) to form an inlay (5) which is arranged parallel to the surface of the second metal layer for shielding against microwave radiation,
**characterized in that** the RFID chip (10) is applied directly to the second metal layer with only an adhesive layer (4) interposed, wherein the second metal layer is produced from a plurality of adjacent foil sections (6), all of which enclose a distance (8) of at most one millimetre between one another, and the antenna (9) extends at least in sections between the foil sections (6) or bridges the distance (8), wherein the metal layers (14, 6) arranged on both sides shield the RFID chip (10) held in the inlay (5) and its antenna (9) from microwave radiation.

2. The system according to claim 1, **characterized in that** the RFID chip (10) is an NFC, HF or UHF chip or a dual-frequency chip with a plurality of these frequency ranges.

3. The system according to any one of claims 1 or 2, **characterized in that** the distance (8) between the foil sections (6) is selected to be less than one millimetre.

4. The system according to any one of the preceding claims, **characterized in that** the smart label (1) has a first cover foil (2) and a second cover foil (3), between which the RFID chip (10), the antenna (9) and the foil sections (6) are accommodated, with the interposition of at least one partially or fully adhesive layer (4).

5. The system according to claim 4, **characterized in that** an adhesive layer and a releasable carrier paper, preferably a carrier paper (15) siliconized on one side, are assigned to the smart label (1) on its second cover foil (3) facing the foil sections (6).

6. The system according to at least one of the preceding claims, **characterized in that** the foil sections (6) are made from an aluminum foil.

7. A microwaveable crockery item, comprising a container (11) with a system according to claim 1, wherein the shielding element (7) comprises a first metal layer (14) which can be detached from the container (11) and which is designed as a sleeve, as a coaster or as a further crockery item, in particular as a lid (12).

8. The crockery item according to claim 7, **characterized in that** the smart label (1) has a first cover foil (2) and a second cover foil (3), between which the RFID chip (10), the antenna (9) and the foil sections (6) are accommodated, with the interposition of at least one partially or fully adhesive layer (4).

9. The crockery item according to claim 8, **characterized in that** the first cover foil (2) and/or the second cover foil (3) have at least approximately the same thermal expansion as the container (11), the adhesives of the adhesive layers (4) preferably being selected such that relative movements are also possible between the inlay and the cover foils.

10. The crockery item according to any one of claims 7 to 9, **characterized in that** the smart label (1) is accommodated in a cavity of the container (11).

11. The crockery item according to any one of claims 7 to 10, **characterized in that** the smart label (1) is enclosed with a protective foil or a casting compound or a plastic plate, by an in-mould process or by heat sealing and/or non-detachably connected to the container.

## Revendications

1. Système composé d'une étiquette intelligente (1) et d'un élément de blindage (7), dans lequel l'élément de blindage (7) comprend une première couche métallique (14) qui peut être détachée de l'étiquette intelligente (1) et l'étiquette intelligente (1) comprend une puce RFID (10), une antenne (9) connectée électriquement à celle-ci et une deuxième couche métallique, dans laquelle la puce RFID (10) est combinée avec l'antenne (9) pour former une incrustation (5) qui est disposée parallèlement à la surface de la deuxième couche métallique pour le blindage contre le rayonnement micro-ondes,
**caractérisé en ce que** la puce RFID (10) est appliquée directement sur la seconde couche métallique avec seulement une couche adhésive (4) interposée, la seconde couche métallique étant produite à partir d'une pluralité de sections de feuille adjacentes (6), chacune d'elles renfermant une distance (8) d'au plus un millimètre entre elles, et l'antenne (9) s'étendant au moins en sections entre les sections de feuille (6) ou pontant la distance (8), les couches métalliques (14, 6) disposées des deux côtés protégeant la puce RFID (10) contenue dans l'incrustation (5) et son antenne (9) du rayonnement des micro-ondes.

2. Le système selon la revendication 1, **caractérisé en ce que** la puce RFID (10) est une puce NFC, HF ou UHF ou une puce à double fréquence avec une pluralité de ces gammes de fréquences.

3. Le système selon l'une des revendications 1 ou 2, **caractérisé en ce que** la distance (8) entre les sections de feuille (6) est choisie pour être inférieure à un millimètre.

4. Le système selon l'une des revendications précédentes, **caractérisé en ce que** l'étiquette intelligente (1) comporte une première feuille de couverture (2) et une deuxième feuille de couverture (3), entre lesquelles la puce RFID (10), l'antenne (9) et les sections de feuille (6) sont logées, avec l'interposition d'au moins une couche partiellement ou totalement adhésive (4).

5. Le système selon la revendication 4, **caractérisé en ce qu'**une couche adhésive et un papier support détachable, de préférence un papier support (15) siliconé d'un côté, sont affectés à l'étiquette intelligente (1) sur sa deuxième feuille de couverture (3) faisant face aux sections de feuille (6).

6. Le système selon au moins l'une des revendications précédentes, **caractérisé en ce que** les sections de feuille (6) sont fabriquées à partir d'une feuille d'aluminium.

7. Pièce de vaisselle micro-ondable, comprenant un récipient (11) avec un système selon la revendication 1, dans laquelle l'élément de blindage (7) comprend une première couche métallique (14) qui peut être détachée du récipient (11) et qui est conçue comme un manchon, comme un sous-verre ou comme une autre pièce de vaisselle, en particulier comme un couvercle (12).

8. La pièce de vaisselle selon la revendication 7, **caractérisé en ce que** l'étiquette intelligente (1) comporte une première feuille de couverture (2) et une deuxième feuille de couverture (3), entre lesquelles la puce RFID (10), l'antenne (9) et les sections de feuille (6) sont logées, avec l'interposition d'au moins une couche partiellement ou entièrement adhésive (4).

9. La pièce de vaisselle selon la revendication 8, **caractérisé en ce que** la première feuille de couverture (2) et/ou la deuxième feuille de couverture (3) ont au moins approximativement la même dilatation thermique que le récipient (11), les adhésifs des couches adhésives (4) étant de préférence choisis de manière à ce que des mouvements relatifs soient également possibles entre l'incrustation et les feuilles de couverture.

10. La pièce de vaisselle selon l'une des revendications 7 à 9, **caractérisé en ce que** l'étiquette intelligente (1) est logée dans une cavité du récipient (11).

11. La pièce de vaisselle selon l'une des revendications 7 à 10, **caractérisé en ce que** l'étiquette intelligente (1) est enfermée par une feuille de protection, un composé de coulée ou une plaque de plastique, par un processus de moulage ou par scellement à chaud et/ou reliée de manière indissociable au récipient.
